# DEMANDE DE BREVET EUROPEEN

(11) **EP 3 664 114 A1**
(43) Date de publication de la demande: **10.06.2020**
(21) Numéro de dépôt: 19213564.8
(22) Date de dépôt: 04.12.2019
(51) Int. Cl.: H01G 11/46, H01G 11/38, H01G 11/62

(54) **UTILISATION D'AU MOINS UN OXYDE MIXTE D'URANIUM COMME MATÉRIAU ACTIF D'UNE ÉLECTRODE DE SUPERCONDENSATEUR ET SUPERCONDENSATEUR COMPRENANT UN TEL MATERIAU ACTIF**

(30) Priorité: 05.12.2018 FR 1872393
(71) Demandeur: Commissariat à l'énergie atomique et aux énergies alternatives, 75015 Paris (FR)
(72) Inventeur: DELAHAYE, Thibaud, 30330 TRESQUES (FR); LETURCQ, Gilles, 84850 CAMARET SUR AIGUES (FR); LEBLANC, Martin, 34270 SAINTE CROIX DE QUINTILLARGUES (FR); LEGREE, Manuel, 35130 MOUTIERS (FR)
(74) Mandataire: Brevalex

(57) **Abrégé**

L'invention a trait à l'utilisation d'un oxyde d'uranium comprenant au moins un élément de la famille des terres rares comme matériau actif d'une électrode de supercondensateur. L'oxyde d'Uranium et de terre rare (A) correspondant à la formule suivante:

U₁₋ₓAₓO_{2+/-d}

## Description

### DOMAINE TECHNIQUE

La présente invention a trait à l'utilisation d'au moins un oxyde mixte d'uranium comme matériau actif d'un dispositif électrochimique du type supercondensateur, une électrode d'un dispositif du type supercondensateur comprenant un tel matériau actif et à un dispositif du type supercondensateur comprenant une telle électrode.

Les dispositifs du type supercondensateur trouvent leur application dans de nombreux domaines, nécessitant des densités de puissance élevées et des restitutions d'énergie massives et très rapides, notamment dans l'alimentation des systèmes embarqués, comme les défibrillateurs, dans l'alimentation des téléphones mobiles ou encore dans l'alimentation des véhicules, par exemple, les voitures électriques (les dispositifs de type supercondenstateur pouvant assurer un rôle de tampon entre le variateur de vitesse et les batteries), les locomotives (les dispositifs de type supercondensateur pouvant assurer le rôle d'alimentation du démarreur) ou encore les éoliennes (les dispositifs de type supercondensateur pouvant assurer l'alimentation pour le contrôle d'orientation des pales).

### ÉTAT DE LA TECHNIQUE ANTÉRIEURE

Les supercondensateurs (pouvant être également qualifiés de supercapacités) constituent des dispositifs à stockage d'énergie permettant d'obtenir une densité de puissance et une densité d'énergie intermédiaires entre celles obtenues pour des batteries électrochimiques et des condensateurs électrolytiques classiques et présentent pour particularité de permettre de restituer plus rapidement de l'énergie que n'est apte à le faire une batterie électrochimique.

Du point de vue du fonctionnement, les supercondensateurs fonctionnent sur le principe de la double couche électrochimique, d'où l'appellation anglo-saxonne parfois rencontrée de «*Electrochemical double layer capacitor*» (connue également sous l'abréviation EDLC), soit, en d'autres termes, sur le principe de stockage d'énergie par distribution, au sein d'au moins une cellule, des ions provenant d'un électrolyte au voisinage de la surface de deux électrodes poreuses (respectivement, une électrode positive et une électrode négative) imprégnées d'un électrolyte ionique et séparées par une membrane poreuse permettant d'assurer une isolation électronique entre les électrodes, tout en permettant un passage facile des ions de l'électrolyte.

Ainsi, plus spécifiquement, une cellule de base d'un supercondensateur peut se résumer aux éléments suivants :
- une électrode positive ;
- une interface électrode positive/électrolyte formant une double couche électrochimique ;
- une membrane poreuse imprégnée par ledit électrolyte ; -une électrode négative ; et
- une interface électrode négative/électrolyte formant une double couche électrochimique.

Du fait de l'existence de ces deux interfaces formant chacune une double couche électrochimique, un supercondensateur peut être considéré comme l'association en série de deux condensateurs, l'un à l'électrode positive et l'autre à l'électrode négative, ces deux condensateurs étant créés par application d'un courant aux bornes du supercondensateur, ce qui crée une zone de charges aux deux interfaces électrode-électrolyte, l'énergie étant ainsi stockée de façon électrostatique.

Il est connu des supercondensateurs, dont les deux électrodes (électrode positive et électrode négative) sont toutes deux à base de carbone activé et l'électrolyte à base d'ions lithium, ce type de supercondensateurs présentant une forte densité de puissance, une cyclabilité élevée mais toutefois une densité d'énergie faible liée à la fois à la capacité moyenne du supercondensateur (celle-ci étant de l'ordre de 10 Wh/kg) et à la tension de fonctionnement, les facteurs limitatifs étant les suivants :
- la tension de fonctionnement doit être relativement faible (de l'ordre de 2,7 à 2,8 V) pour conserver une durée de vie élevée et une autodécharge contrôlée, le phénomène d'autodécharge étant plus élevé que celui des batteries ;
- la capacité volumique des matériaux d'électrode ; et
- les constituants passifs (tels que les collecteurs, les séparateurs, le boîtier), qui peuvent nuire aux performances du dispositif, ce qui amène les concepteurs à réduire ce type de constituants.

En variante des supercondensateurs dont les deux électrodes sont à base de carbone activé, il a été mis au point des supercondensateurs dont le carbone activé a été remplacé par un matériau apte à subir une réaction redox de surface, c'est-à-dire induisant peu de modifications de la structure du matériau contrairement aux réactions redox se produisant avec des matériaux actifs de batterie, ladite réaction redox de surface devant être réversible.

Un exemple de matériau souscrivant à ces principes est l'oxyde de ruthénium RuO₂, qui a la capacité à voir son degré d'oxydation être modifié facilement par simple acceptation/cession d'ions H⁺ comme figuré dans l'équation chimique suivante :

RuO₂ + ne⁻ + nH⁺ ↔ RuO₂₋ₙ(OH)ₙ avec 0 ≤ n ≤ 2

Ce phénomène de réaction redox en surface est qualifié de pseudocapacité et la capacité délivrée découlant de ces réactions est qualifiée de capacité faradique. Quand bien même ce stockage est réalisé grâce à une réaction redox, le comportement électrochimique de ces réactions d'oxydo-réduction de surface est très proche de celui des réactions capacitives de formation de double couche électrochimique, les supercondensateurs faisant l'objet de ces réactions redox de surface étant qualifiés de supercondensateurs pseudocapacitifs. Toutefois, l'oxyde de ruthénium, bien que présentant une capacité spécifique élevée pouvant atteindre 700 F/g, est trop onéreux, ce qui empêche un déploiement à grande échelle et confine ainsi son application à des domaines de niches.

En vue de répondre à la demande d'accroissement de la densité d'énergie, il a été développé également des supercondensateurs se situant entre les supercondensateurs classiquement utilisés à base de carbone activé et les batteries ou pseudocapacités, ce qui a amené à qualifier ceux-ci de supercondensateurs asymétriques hybrides, du fait que, spécifiquement, l'une des électrodes est constituée à partir d'un matériau de batterie rechargeable ou d'un matériau pseudocapacitif et l'autre électrode est constituée à base de carbone activé, l'électrolyte situé entre ces deux électrodes étant classiquement un électrolyte aqueux.

En d'autres termes, ce type de supercondensateur fonctionne sur le principe selon lequel le stockage de charges au niveau d'une électrode se produit par le biais d'une réaction redox (telle qu'une réaction redox de surface comme dans les pseudocapacités), tandis que le stockage de charges au niveau de l'autre électrode se produit par le biais de la formation d'une double couche électrochimique (c'est-à-dire en l'absence de réaction redox), ce qui permet de combiner, à la fois, les propriétés de densité d'énergie élevée des batteries ou pseudocapacités (grâce à l'électrode siège d'une réaction redox) et les propriétés de densité de puissance élevée (grâce à l'électrode siège de la formation de la double couche électrochimique).

Un exemple de supercondensateur asymétrique hybride, qui a fait l'objet d'études est un supercondensateur à base de MnO₂, et, plus spécifiquement, un supercondensateur, dans lequel l'une des électrodes est à base de MnO₂ et l'autre électrode est à base de carbone activé, le dioxyde de manganèse étant un matériau pseudocapacitif apte à subir une réaction redox de surface. Toutefois, le dioxyde de manganèse, bien que présentant une bonne capacité spécifique et une cyclabilité élevée, présente une densité d'énergie trop faible pour permettre son déploiement.

Ainsi, au vu de ce qui existe déjà, les inventeurs se sont fixé pour objectif de mettre au point des oxydes spécifiques aptes à être utilisés efficacement comme matériau actif dans une électrode du type supercondensateur, et qui présentent notamment des degrés d'oxydation multiples propices au développement de propriétés pseudocapacitives.

### EXPOSÉ DE L'INVENTION

Ainsi, l'invention a trait à l'utilisation d'un oxyde d'uranium comprenant au moins un élément de la famille des terres rares comme matériau actif d'une électrode de supercondensateur.

L'utilisation d'un tel oxyde comme matériau actif d'électrode de supercondensateur présente les avantages suivants :
- le bénéfice de densités volumiques élevées, liées à la présence dans la structure du matériau actif d'uranium, conduisant à des densités volumiques de puissance et d'énergie également élevées ;
- l'aptitude de l'uranium à prendre des degrés d'oxydation multiples conférant à l'oxyde des propriétés pseudocapacitives jusqu'ici inexploitées pour de telles applications ;
- la valorisation d'un sous-produit de l'industrie électronucléaire, l'uranium appauvri issu des usines d'enrichissement de l'uranium constituant une filière d'approvisionnement fiable et à faible coût.

Avant d'entrer plus en détail dans l'exposé de cette invention, nous précisons les définitions suivantes.

Par matériau actif, on entend un matériau qui est impliqué directement dans le stockage de charges, ce stockage de charges pouvant résulter de réactions électrochimiques réversibles de surface, auquel cas le matériau peut être qualifié également de matériau pseudocapacitif.

Par élément de la famille des terres rares, on entend, dans ce qui précède et ce qui suit, un élément choisi parmi les éléments lanthanides (à savoir, La, Ce, Pr, Nd, Pm, Sm, Eu, Gd, Tb, Dy, Ho, Er, Tm, Yb, Lu), l'yttrium, le scandium et les mélanges de ceux-ci et, en particulier, choisi parmi La, Ce, Nd, Sm, Gd, Yb, Y et les mélanges de ceux-ci. De préférence, le ou les éléments de la famille des terres rares sont choisis parmi La, Ce, Nd, Gd, Y et les mélanges de ceux-ci.

En particulier, l'oxyde d'uranium comprenant au moins un élément de la famille des terres rares peut répondre à la formule (I) suivante :

U₁₋ₓAₓO_{2±δ}

dans laquelle 0<x<1 ; 0≤δ≤0,5 et A est au moins un élément de la famille des terres rares.

Dans la formule ci-dessus, le ou les éléments de la famille des terres rares représenté par l'élément A peut être considéré comme substituant partiellement l'élément uranium, cette substitution pouvant être simple (lorsque l'élément uranium est substitué par un seul type d'élément A) ou multiple (lorsque l'élément uranium est substitué par plusieurs types d'élément A).

Plus spécifiquement, A peut être, en particulier, choisi parmi La, Ce, Nd, Sm, Gd, Yb, Y et les mélanges de ceux-ci et, plus particulièrement, parmi La, Ce, Nd, Gd, Y et les mélanges de ceux-ci.

Encore plus spécifiquement, A peut être Gd, Nd ou Ce, des oxydes particuliers entrant dans le cadre de cette définition étant U_{0,5}Gd_{0,5}O_{2±δ}, U_{0,5}Nd_{0,5}O_{2±δ} ou U_{0,7}Ce_{0,3}O_{2±δ}, avec 0≤δ≤0,5.

Les oxydes utilisés conformément à l'invention peuvent être synthétisés par différents moyens de synthèse, tels que les procédés sol-gel, les procédés de précipitation, les procédés de co-conversion, les procédés de dénitration, les procédés de synthèse hydrothermale, dès lors que :
- ces procédés peuvent permettre l'obtention d'un oxyde conforme à l'invention sous forme monophasée et pulvérulente, la forme pulvérulente étant particulièrement appropriée pour être ensuite incorporée dans une électrode de supercondensateur;
- ces procédés peuvent permettre l'obtention d'un oxyde à haute surface spécifique (par exemple, par le biais d'une texturation spécifique, de la création de défaut de surfaces), une haute surface spécifique pouvant être un critère important dans les performances électrochimiques du matériau actif.

Comme déjà mentionné, les oxydes définis ci-dessus sont utilisés comme matériaux actifs d'électrode de supercondensateur voire également comme matériaux pseudocapacitifs d'électrode de supercondensateur du fait de leur capacité à stocker des charges par réaction chimique de surface.

Ainsi, l'invention a trait également à une électrode de supercondensateur comprenant, comme matériau actif, au moins oxyde d'uranium comprenant au moins un élément de la famille des terres rares tel que défini ci-dessus.

De manière plus spécifique, l'électrode comprend, comme mentionné ci-dessus, comme matériau actif, au moins un oxyde tel que défini ci-dessus, cet oxyde pouvant être présent en une teneur d'au moins 25% massique par rapport à la masse totale de l'électrode, étant entendu que la masse totale de l'électrode n'inclut pas la masse du collecteur de courant. De préférence, l'oxyde est présent en une teneur allant de 25% massique à 80% massique par rapport à la masse totale de l'électrode et, plus particulièrement, de 45% à 75% massique par rapport à la masse totale de l'électrode.

Outre la présence du ou des oxydes susmentionnés, l'électrode peut comprendre un ou plusieurs liants organiques, qui vont contribuer à assurer la cohésion mécanique de ladite électrode.

Ces liants organiques peuvent être, en particulier, des liants polymériques comprenant un ou plusieurs polymères choisis parmi :
*les polymères fluorés, tels qu'un polytétrafluoroéthylène (connu sous l'abréviation PTFE), un polyfluorure de vinylidène (connu sous l'abréviation PVDF), un copolymère poly(fluorure de vinylidène-co-hexafluoropropène) (connu sous l'abréviation PVDF-HFP), un copolymère fluoré éthylène-propylène (connu sous l'abréviation FEP), un copolymère issu de la copolymérisation de tétrafluoroéthylène et du perfluoroalcoxyvinyléther (connu sous l'abréviation PFA) ;
*les polyimides ;
*les polyacrylonitriles ; et
*les mélanges de ceux-ci.

Avantageusement, ce ou ces liants sont présents en une teneur choisie de sorte à être la plus faible possible, sans que cela compromette la tenue mécanique au cours du cyclage sur l'ensemble de la gamme de températures d'utilisation, généralement comprise entre -40°C et la température d'ébullition du ou des solvants organiques entrant éventuellement dans la constitution de l'électrolyte. Par exemple, le ou les liants peuvent être présents en une teneur inférieure ou égale à 15% massique par rapport à la masse totale de l'électrode, de préférence de 1 à 15% massique, de préférence, encore, de 2 à 10% massique par rapport à la masse totale de l'électrode. Il est entendu que la masse totale de l'électrode n'inclut pas la masse du collecteur de courant, le cas échéant.

L'électrode peut comprendre, également, un additif carboné conducteur de l'électricité, choisi parmi les noirs de carbone, les noirs d'acétylène, du graphite, du graphène, des nanotubes de carbone, des fibres de carbone, du carbone graphitique et les mélanges de ceux-ci, ledit additif carboné pouvant être présent, le cas échéant en une teneur allant jusqu'à 50% massique par rapport à la masse totale de l'électrode, de préférence de 20 à 40% massique de manière à obtenir sa percolation et d'assurer un bon transfert d'électrons. Il est entendu que la masse totale de l'électrode n'inclut pas la masse du collecteur de courant, le cas échéant.

Ainsi, d'un point de vue structural, l'électrode de l'invention peut se présenter sous forme d'un matériau composite comprenant une matrice polymérique (constituée du ou des liants polymériques susmentionnés) et comprenant, comme charge(s), au moins un oxyde tel que défini ci-dessus et éventuellement au moins un additif carboné conducteur de l'électricité, ledit matériau composite pouvant être sous forme d'une couche.

L'électrode susmentionnée peut être associée à un collecteur de courant conducteur de l'électricité, ce collecteur de courant pouvant se présenter sous forme d'un feuillard métallique apposé sur l'une des faces desdites électrodes et, plus spécifiquement la face qui n'est pas en contact avec l'électrolyte lorsque l'électrode est placée dans un supercondensateur.

Plus spécifiquement, l'électrode conforme à l'invention peut être une électrode positive d'un supercondensateur hybride, c'est-à-dire une électrode apte à se charger par une réaction électrochimique réversible (ou, en d'autres termes, une réaction redox), cette réaction électrochimique se produisant en surface de l'oxyde tel que défini ci-dessus, lequel présente ainsi des propriétés pseudocapacitives qui, dans un contexte de supercondensateur, peut engendrer une densité d'énergie importante.

Enfin, l'invention a également trait à un supercondensateur comprenant, comme matériau actif d'une de ses électrodes, au moins un oxyde tel que défini ci-dessus et, plus spécifiquement, un supercondensateur comprenant au moins une cellule comprenant une électrode positive, une électrode négative et un électrolyte conducteur d'ions disposé entre l'électrode positive et l'électrode négative, caractérisé en ce que l'une au moins des électrodes comprend, comme matériau actif, au moins un oxyde tel que défini ci-dessus.

Selon une première variante, lorsque l'électrode positive et l'électrode négative comportent toutes deux, comme matériau actif, au moins un oxyde tel que défini ci-dessus, le supercondensateur, qui en résulte, est un supercondensateur pseudocapacitif, les deux électrodes étant le siège de réactions redox de surface (ou réactions électrochimiques) au niveau de l'oxyde.

Selon cette variante, l'électrode, qu'elle soit positive ou négative, peut répondre aux mêmes spécificités que celles déjà mentionnées ci-dessus dans la description relative aux électrodes en tant que telles.

Lorsque l'électrode positive comporte, comme matériau actif, au moins un oxyde tel que défini ci-dessus, et l'électrode négative comporte, comme matériau actif, un matériau autre que l'oxyde tel que défini ci-dessus, le supercondensateur, qui est en résulte, est un supercondensateur asymétrique.

Selon cette variante, l'électrode positive peut répondre aux mêmes autres spécificités que celles déjà mentionnées ci-dessus dans la description relative aux électrodes en tant que telles.

Quant à l'électrode négative, elle peut comprendre, comme matériau actif, un matériau apte à stocker des charges par formation d'une double couche électrochimique (ce qui correspond à un stockage de charges sous forme électrostatique sans réaction redox) grâce à l'adsorption d'ions à la surface du matériau actif, ces ions provenant classiquement de l'électrolyte. Plus spécifiquement, une telle électrode négative peut comporter, comme matériau actif, du carbone activé.

Dans ce cas, l'intérêt de l'asymétrie du supercondensateur repose sur la possibilité d'obtenir de fortes densités de puissance associées au matériau actif de l'électrode négative et de fortes densités d'énergie associées au matériau actif de l'électrode positive (lequel est l'oxyde tel que défini ci-dessus présentant des propriétés pseudocapacitives).

Par carbone activé, il s'entend, classiquement, un ensemble de matériaux carbonés amorphes possédant des surfaces spécifiques très élevées et pouvant atteindre 2 500 m²/g.

Le carbone activé peut être obtenu à partir de différentes sources, telles que le charbon, le bois, les coques de noix de coco, la tourbe et certains résidus pétroliers, lesquelles sources sont soumises à un traitement d'activation, telle qu'une activation physique, une activation chimique de sorte à générer un matériau très poreux et présentant une surface spécifique très importante.

Plus spécifiquement, une activation physique peut consister, dans un premier temps, à soumettre la source choisie à une pyrolyse (par exemple, à une température allant de 300 à 500°C) de sorte à obtenir un précurseur composé de feuillets irréguliers présentant une première porosité (essentiellement fermée) puis, dans un deuxième temps, à soumettre ce précurseur à un traitement thermique sous atmosphère oxydante (par exemple, à une température allant de 800°C à 1100°C), moyennant quoi il résulte un matériau présentant une porosité ouverte.

Quant à l'activation chimique, celle-ci peut consister à soumettre la source choisie à un agent chimique (par exemple, de l'acide phosphorique) sous atmosphère contrôlée oxydante à une température pouvant aller de 400°C à 600°C.

Outre le matériau actif, l'électrode négative peut comporter un ou plusieurs liants organiques, qui vont contribuer à assurer la cohésion mécanique de ladite électrode.

Ces liants organiques peuvent être, en particulier, des liants polymériques comprenant un ou plusieurs polymères choisis parmi :
*les polymères fluorés, tels qu'un polytétrafluoroéthylène (connu sous l'abréviation PTFE), un polyfluorure de vinylidène (connu sous l'abréviation PVDF), un copolymère poly(fluorure de vinylidène-co-hexafluoropropène) (connu sous l'abréviation PVDF-HFP), un copolymère fluoré éthylène-propylène (connu sous l'abréviation FEP), un copolymère issu de la copolymérisation de tétrafluoroéthylène et du perfluoroalcoxyvinyléther (connu sous l'abréviation PFA) ;
*les polyimides ;
*les polyacrylonitriles ; et
*les mélanges de ceux-ci.

Avantageusement, ce ou ces liants sont présents en une teneur choisie de sorte à être la plus faible possible, sans que cela compromette la tenue mécanique au cours du cyclage sur l'ensemble de la gamme de températures d'utilisation, généralement comprise entre -40°C et la température d'ébullition du ou des solvants organiques entrant éventuellement dans la constitution de l'électrolyte. Par exemple, le ou les liants peuvent être présents en une teneur inférieure ou égale à 15% massique par rapport à la masse totale de l'électrode, de préférence de 1 à 15% massique, de préférence, encore, de 2 à 10% massique par rapport à la masse totale de l'électrode. Il est entendu que la masse totale de l'électrode n'inclut pas la masse du collecteur de courant, le cas échéant.

L'électrode négative peut comprendre, également, un additif carboné conducteur de l'électricité autre que du carbone activé, lorsque celui-ci constitue le matériau actif, l'additif carboné conducteur de l'électricité pouvant être choisi parmi les noirs de carbone, les noirs d'acétylène, du graphite, les nanotubes de carbone, les fibres de carbone et les mélanges de ceux-ci, par exemple, les fibres de carbone obtenues en phase vapeur (connues sous l'abréviation VGCF), ledit additif carboné pouvant être présent en une teneur allant jusqu'à 50% massique par rapport à la masse totale de l'électrode positive, de préférence de 20 à 40% massique, de préférence encore de 30 à 40% massique par rapport à la masse totale de l'électrode négative. Il est entendu que la masse totale de l'électrode n'inclut pas la masse du collecteur de courant, le cas échéant.

Ainsi, d'un point de vue structural, l'électrode négative peut se présenter sous forme d'un matériau composite comprenant une matrice polymérique (constituée du ou des liants polymériques susmentionnés) et comprenant, comme charge(s), au moins un matériau actif et éventuellement au moins un additif carboné conducteur de l'électricité, ledit matériau composite pouvant être sous forme d'une couche.

L'électrode susmentionnée peut être associée à un collecteur de courant conducteur de l'électricité, ce collecteur de courant pouvant se présenter sous forme d'un feuillard métallique apposé sur l'une des faces desdites électrodes et, plus spécifiquement la face qui n'est pas en contact avec l'électrolyte lorsque l'électrode est placée dans le dispositif du type supercondensateur.

Entre les deux électrodes du supercondensateur est disposé un électrolyte conducteur d'ions, les ions compris dans cet électrolyte participant, classiquement, pour la ou les électrodes comprenant au moins un oxyde tel que défini ci-dessus, aux réactions électrochimiques de surface et, le cas échéant, pour l'électrode comprenant un matériau actif apte à stocker des charges par formation d'une double couche électrochimique, à la formation de la double couche électrochimique.

Par ailleurs, l'électrolyte doit, classiquement, répondre aux propriétés suivantes :
- une plage de stabilité électrochimique qui soit compatible avec la tension aux bornes du supercondensateur, ce qui signifie, en d'autres termes, que la tension aux bornes du supercondensateur ne doit pas dépasser cette plage ;
- une plage de fonctionnement en température, c'est-à-dire que la température du supercondensateur ne doit pas détériorer les constituants de l'électrolyte (tel que le solvant lorsque l'électrolyte est un électrolyte liquide).

L'électrolyte des supercondensateurs de l'invention peut être, en particulier, un électrolyte liquide, tel qu'un électrolyte organique, un électrolyte aqueux ou un liquide ionique.

Concernant les électrolytes organiques, il peut s'agir d'électrolytes comprenant un ou plusieurs solvants organiques et un ou plusieurs sels dissous dans le ou les solvants organiques.

Le ou lesdits solvants organiques peuvent être choisis parmi :
- les solvants nitriles, tels que l'acétonitrile, le 3-méthoxypropionitrile (connu sous l'abréviation MPN), l'adiponitrile (connu sous l'abréviation ADP), le glutaronitrile (connu sous l'abréviation GN) ;
- les solvants carbonates, tels que le carbonate d'éthylène (connu sous l'abréviation EC), le carbonate de propylène (connu sous l'abréviation PC), le diméthylcarbonate (connu sous l'abréviation DMC), le diéthylcarbonate (connu sous l'abréviation DEC), l'éthylméthylcarbonate (connu sous l'abréviation EMC) ;
- les solvants lactones, tels que la γ-butyrolactone (connue sous l'abréviation GBL), la γ-valérolactone (connu sous l'abréviation GVL) ;
- les solvants sulfones, tels que la diméthylsulfone (connue sous l'abréviation DMS), l'éthylméthylsulfone (connue sous l'abréviation EMS), la diéthylsulfone (connue sous l'abréviation DES), le sulfolane (connu sous l'abréviation SL) ;
- les solvants lactames, tels que la N-méthylpyrrolidone (connue sous l'abréviation NMP) ;
- les solvants amides, tels que le N,N-diméthylformamide (connu sous l'abréviation DMF), le diméthylacétamide (connu sous l'abréviation DMA), le formamide (connu sous l'abréviation FA), le N-méthylformamide (connu sous l'abréviation NMF) ;
- les solvants cétones, tels que l'acétone, la méthyléthylcétone (connu sous l'abréviation MEK) ;
- les solvants nitroalcanes, tels que le nitrométhane (connu sous l'abréviation NM), le nitroéthane (connu sous l'abréviation NE) ;
- les solvants amines, tels que le 1,3-diaminopropane (connu sous l'abréviation DAP), l'éthylènediamine (connue sous l'abréviation EDA) ;
- les solvants sulfoxydes, tels que le diméthylsulfoxyde (connu sous l'abréviation DMSO) ;
- les solvants esters, tels que l'acétate d'éthyle (connu sous l'abréviation EA), l'acétate de méthyle (connu sous l'abréviation MA), l'acétate de propyle (connu sous l'abréviation AP) ;
- les solvants éthers linéaires, tels que le diméthoxyéthane (connu sous l'abréviation DME) ;
- les solvants éthers cycliques, tels que le dioxane, le dioxolane (connu sous l'abréviation DIOX), le tétrahydrofurane (connu sous l'abréviation THF) ;
- les solvants oxazolidones, tels que le 3-méthyl-2-oxazolidone ; et -les mélanges de ceux-ci.

Quant aux sels utilisables dans des électrolytes organiques, il peut s'agir de sels d'ammonium, tel que le tétrafluoroborate de tétraéthylammonium (Et₄NBF₄).

Concernant les électrolytes aqueux, il peut s'agir d'une solution aqueuse comprenant des cations, tels que H⁺, K⁺, Li⁺ et Na⁺ et comprenant des anions, tels que OH⁻SO₄²⁻ et NO₃⁻.

Plus spécifiquement, il peut s'agir d'une solution aqueuse comprenant du sulfate de lithium Li₂SO₄, du sulfate de sodium Na₂SO₄, du sulfate de potassium K₂SO₄, de l'acide sulfurique H₂SO₄, du nitrate de lithium LiNO₃ ou de l'hydroxyde de potassium KOH.

Concernant les liquides ioniques, il peut s'agir de liquides ioniques à base de cations imidazolium, tels que le 1-éthyl-3-méthylimidazolium, les liquides ioniques ayant pour particularité d'être des électrolytes plus visqueux que les électrolytes aqueux ou organiques, ce qui contribue à diminuer la capacité des supercondensateurs comprenant de tels électrolytes mais en présentant, toutefois, une fenêtre de stabilité électrochimique.

Lorsque l'électrolyte est liquide, il peut être amené à imprégner un séparateur en un matériau poreux et isolant électriquement, ce séparateur ayant pour finalité d'empêcher tout contact entre les électrodes tout en permettant aux ions de l'électrolyte de circuler d'une électrode à l'autre, étant entendu que, pour assurer cette finalité, le séparateur doit être en un matériau résistant chimiquement à l'électrolyte. A titre d'exemple, le séparateur peut être en un matériau polymère, tel que du polypropylène.

L'électrolyte peut être également un électrolyte gélifié, à savoir un électrolyte liquide imprégnant une matrice polymère qui gélifie au contact de cet électrolyte liquide, un exemple d'électrolyte gélifié étant un électrolyte comprenant une matrice gélifié en un copolymère de fluorure de vinylidène et d'hexafluoropropylène imprégnée par une solution organique comprenant le sel Et₄NBF₄.

D'autres caractéristiques apparaîtront mieux à la lecture du complément de description qui suit.

Bien entendu, les exemples qui suivent ne sont donnés qu'à titre d'illustration de l'objet de l'invention et ne constituent, en aucun cas, une limitation de cet objet.

### BRÈVE DESCRIPTION DES FIGURES

La figure 1, dénommée également [Fig. 1], est un graphique illustrant l'évolution du courant I (en A/g) en fonction du potentiel E (en mV exprimé par rapport au couple Ag/AgCl) de l'essai illustré à l'exemple 1.
La figure 2, dénommée également [Fig. 2], est un graphique illustrant l'évolution de la rétention de capacité R (en %) en fonction du nombre de cycles N de l'essai illustré à l'exemple 1.
La figure 3, dénommée également [Fig. 3], est un graphique illustrant l'évolution du courant I (en A/g) en fonction du potentiel E (en mV exprimé par rapport au couple Ag/AgCl) de l'essai illustré à l'exemple 2.
La figure 4, dénommée également [Fig. 4], est un graphique illustrant l'évolution du courant I (en A/g) en fonction du potentiel E (en mV exprimé par rapport au couple Ag/AgCl) de l'essai illustré à l'exemple 3.
La figure 5, dénommée également [Fig. 5], est un graphique l'évolution du courant I (en A/g) en fonction du potentiel E (en mV exprimé par rapport au couple Ag/AgCl) de l'essai illustré à l'exemple comparatif 1.

### EXPOSÉ DÉTAILLÉ DE MODES DE RÉALISATION PARTICULIERS

### EXEMPLE 1

Le présent exemple illustre la préparation d'un oxyde de formule U_{0,5}Gd_{0,5}O_{2±δ} avec 0≤δ≤0,5, la préparation d'une électrode à partir de cet oxyde et la mise en place de cette électrode dans un dispositif, de sorte à tester ses performances électrochimiques.

### a) Préparation de l'oxyde U_{0,5}Gd_{0,5}O_{2±δ}

Pour préparer l'oxyde de formule mentionnée ci-dessus, 3,274 g de nitrate d'uranium hexahydraté puis 2,948 g de nitrate de gadolinium hexahydraté sont pesés et ajoutés dans une solution aqueuse de 100 mL de HNO₃ à 0,5 M sous agitation. D'autre part, 3 g de N,N'-*bis*-méthylène acrylamide sont pesés et ajoutés à une solution de 30 mL d'acide acrylique sous agitation. Lorsque les deux solutions sont homogènes, la solution d'acide acrylique et de N-N'bis méthylène acrylamide est ajoutée à la solution aqueuse contenant les cations d'uranium et de gadolinium. Le mélange est chauffé sur une plaque chauffante. Lorsqu'il atteint l'ébullition, une goutte de peroxyde d'hydrogène H₂O₂ est ajoutée et un gel se forme. Le gel est ensuite chauffé sur une plaque chauffante à 250°C jusqu'à déshydratation complète du gel. Le xérogel ainsi obtenu est calciné sous air pendant 1 heure dans un four tubulaire programmé à 520°C, ce palier étant atteint à la vitesse de 5°C/min depuis la température ambiante (20°C). Une seconde calcination est opérée dans le même four à 620°C pendant 1 heure sous atmosphère Ar/5%H₂. Cette température est atteinte à la vitesse de 5°C/min depuis la température ambiante.

### b) Préparation d'une électrode à partir de l'oxyde U_{0,5}Gd_{0,5}O_{2±δ}

Afin de réaliser une électrode à partir du matériau actif précédemment synthétisé, 187,5 mg de l'oxyde de U_{0.5}Gd_{0.5}O_{2±δ} sont pesés et ajoutés dans un bêcher ainsi que 37,9 mg de noir d'acétylène et 41 mg d'une préparation comprenant du polytétrafluoroéthylène en suspension à 60% massique dans H₂O. Le mélange est versé et broyé dans un mortier. Quelques gouttes d'éthanol sont ajoutées au mélange pendant le broyage pour faciliter l'homogénéisation. La quantité d'éthanol est ajustée pour obtenir une pâte à l'aspect plastifié bien homogène. Cette pâte est ensuite laminée afin d'obtenir un film mince. Des électrodes circulaires de 12 mm de diamètre sont alors découpées au moyen d'un emporte-pièce. Les électrodes obtenues de 22,9 mg sont laissées une journée à l'air en boîte à gants puis pressée 10 secondes sous 8 tonnes dans une grille d'acier inoxydable repliée sur elle-même.

### c) Test électrochimiques

Une électrode obtenue selon les modalités du paragraphe b) ci-dessus est intégrée dans une grille d'acier et est connectée en tant qu'électrode de travail à un potentiostat Voltalab PST050 de Radiometer Analytical exploité par le logiciel Voltamaster 4. Une plaque de platine est utilisée comme contre-électrode et l'électrode de référence est une électrode Ag/AgCl (3 M NaCl). L'électrolyte est une solution aqueuse de KOH à 1 M de pH 13,7.

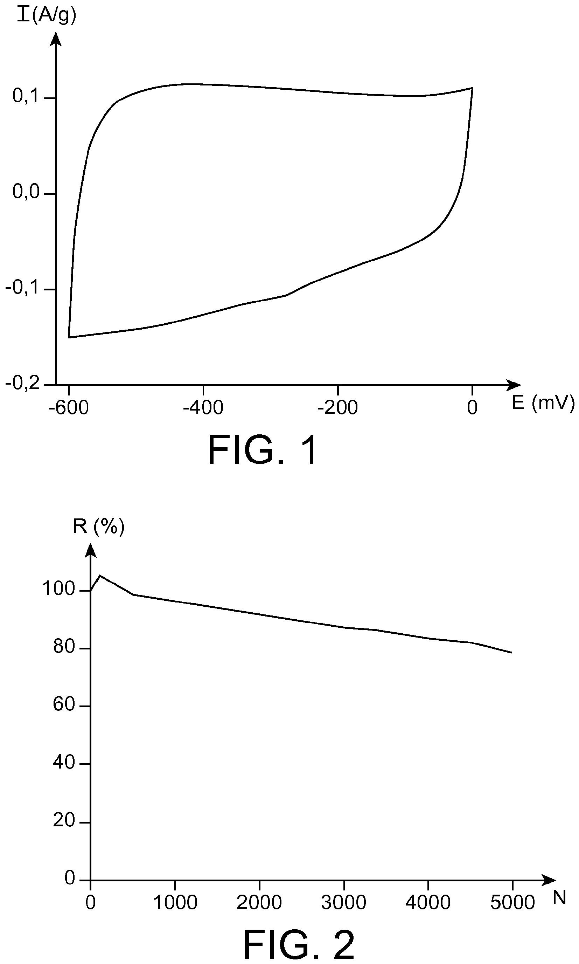

L'électrode est cyclée trente fois à 20 mV/s puis dix fois à : 2, 5, 10, 20, 50 et 100 mV/s sur les plages [-0,6 ; 0 V], [-0,8 ; 0 V] et [-1; 0 V]. Le voltammogramme obtenu est représenté sur la figure 1, illustrant l'évolution du courant I (en A/g) en fonction du potentiel E (en mV exprimé par rapport au couple Ag/AgCl). A 2 mV/s, respectivement pour ces trois domaines, des capacités de 47, 57 et 64 F/g sont obtenues à la décharge. Cela témoigne de l'importante activité électrochimique du matériau synthétisé dans la plage [-1; 0 V]. Il est à noter également que la forme quasi-rectangulaire du voltammogramme témoigne de l'aspect pseudocapacitif du matériau actif.

En complément, un grand nombre de cycles a été imposé à une électrode obtenue selon les modalités du paragraphe a) ci-dessus à 20 mV/s dans le KOH 1M afin de caractériser l'évolution de sa capacité en fonction du nombre de cycles de charge-décharge qui lui sont appliqués. Lors de ce test de durée de vie, 80% de la capacité initiale est conservée après 5000 cycles, comme illustré sur la figure 2 représentant l'évolution de la rétention de capacité R (en %) en fonction du nombre de cycles N. Ces résultats mettent ainsi en évidence la très bonne stabilité du matériau vis-à-vis des mécanismes électrochimiques impliqués et des conditions de travail.

### EXEMPLE 2

Le présent exemple illustre la préparation d'un oxyde de formule U_{0,5}Nd_{0,5}O_{2±δ} avec 0≤δ≤0,5, la préparation d'une électrode à partir de cet oxyde et la mise en place de cette électrode dans un dispositif, de sorte à tester ses performances électrochimiques.

### a) Préparation de l'oxyde U_{0,5}Nd_{0,5}O_{2±δ}

Pour préparer l'oxyde de formule mentionnée ci-dessus, 3,376 g de nitrate d'uranium hexahydraté puis 2,947 g de nitrate de néodyme hexahydraté sont pesés et ajoutés dans une solution aqueuse de 100 mL d'acide nitrique HNO₃ à 0,5 M sous agitation. D'autre part, 3 g de N,N'-*bis*-méthylène acrylamide sont pesés et ajoutés à une solution de 30 mL d'acide acrylique sous agitation. Lorsque les deux solutions sont homogènes, la solution d'acide acrylique et N,N'-*bis*-méthylène acrylamide est ajoutée à la solution aqueuse contenant les cations uranium et néodyme. Le mélange est chauffé sur une plaque chauffante. Lorsqu'il atteint l'ébullition, une goutte de peroxyde d'hydrogène H₂O₂ est ajoutée et un gel se forme. Le gel est ensuite chauffé sur une plaque chauffante à 250°C jusqu'à déshydratation complète du gel. Le xérogel ainsi obtenu est calciné sous air pendant 1 heure dans un four tubulaire programmé à 520°C, ce palier étant atteint à la vitesse de 5°C/min depuis la température ambiante (20°C). Une seconde calcination est opérée dans le même four à 620°C pendant 1 heure sous atmosphère Ar/5%H₂. Cette température est atteinte à la vitesse de 5°C/min depuis la température ambiante.

### b) Préparation d'une électrode à partir de l'oxyde U_{0,5}Nd_{0,5}O_{2±δ}

Afin de réaliser une électrode à partir du matériau actif précédemment synthétisé, 172,8 mg de l'oxyde de U_{0.5}Nd_{0.5}O₂ sont pesés et ajoutés dans un bécher ainsi que 35 mg de noir d'acétylène et 37,5 mg d'une préparation de polytétrafluoroéthylène en suspension à 60% massique dans H₂O. Le mélange est versé et broyé dans un mortier. Quelques gouttes d'éthanol sont ajoutées au mélange pendant le broyage pour faciliter l'homogénéisation. La quantité d'éthanol est ajustée pour obtenir une pâte à l'aspect plastifié bien homogène. Cette pâte est ensuite laminée afin d'obtenir un film mince. Des électrodes circulaires de 12 mm de diamètre sont alors découpées au moyen d'un emporte-pièce. Les électrodes obtenues de 53,4 mg sont laissées une journée à l'air en boîte à gants puis pressée 10 secondes sous 8 tonnes dans une grille d'acier inoxydable repliée sur elle-même.

### c) Test électrochimiques

Une électrode obtenue selon les modalités du paragraphe b) ci-dessus est intégrée dans une grille d'acier et est connectée en tant qu'électrode de travail à un potentiostat Voltalab PST050 de Radiometer Analytical exploité par le logiciel Voltamaster 4. Une plaque de platine est utilisée comme contre-électrode et l'électrode de référence est une électrode Ag/AgCl (3 M NaCl). L'électrolyte est une solution aqueuse de KOH à 1 M de pH 13,7.

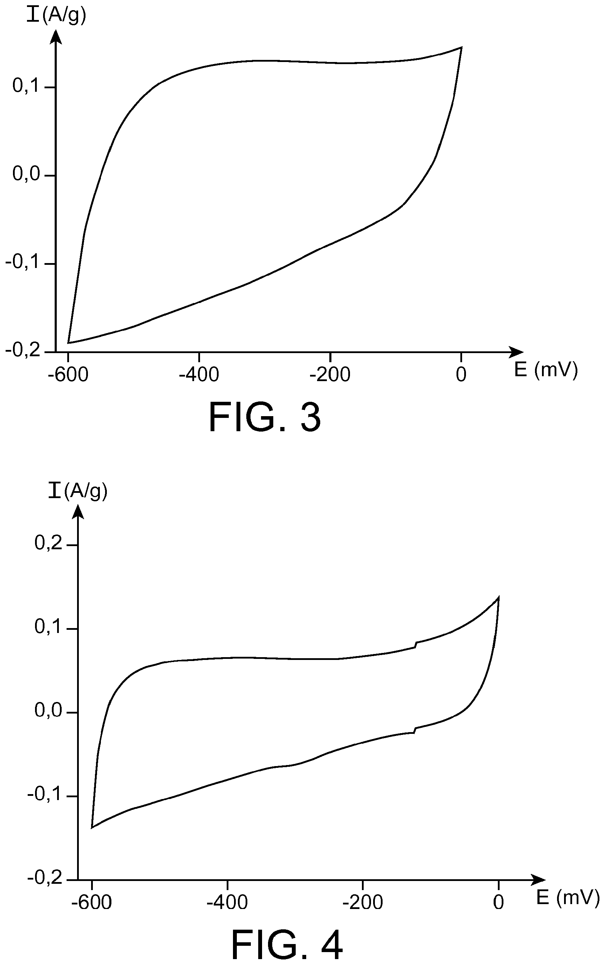

L'électrode est cyclée trente fois à 20 mV/s puis dix fois à : 2, 5, 10, 20, 50 et 100 mV/s sur les plages [-0,6 ; 0 V], [-0,8 ; 0 V] et [-1; 0 V]. Le voltammogramme obtenu est représenté sur la figure 3, illustrant l'évolution du courant I (en A/g) en fonction du potentiel E (en mV exprimé par rapport au couple Ag/AgCl). A 2 mV/s, respectivement pour ces trois domaines, des capacités de 57, 70 et 71 F/g sont obtenues à la décharge respectivement pour chaque plage. Cela témoigne de l'importante activité électrochimique du matériau synthétisé dans la plage [-1; 0 V]. Il est à noter également que la forme quasi-rectangulaire du voltammogramme témoigne de l'aspect pseudocapacitif du matériau actif.

### EXEMPLE 3

Le présent exemple illustre la préparation d'un oxyde de formule U_{0,7}Ce_{0,3}O_{2±δ} avec 0≤δ≤0,5, la préparation d'une électrode à partir de cet oxyde et la mise en place de cette électrode dans un dispositif, de sorte à tester ses performances électrochimiques.

### a) Préparation de l'oxyde U_{0,7}Ce_{0,3}O_{2±δ}

Pour préparer l'oxyde de formule mentionnée ci-dessus, 1,462 g de nitrate d'uranium hexahydraté puis 0,542 g de nitrate de cérium hexahydraté et 0,67 g d'acide citrique sont pesés et ajoutés dans 33 mL d'eau déminéralisée. D'autre part, 1,06 g de N,N'-*bis*-méthylène acrylamide sont pesés et ajoutés à une solution de 10 mL d'acide acrylique sous agitation. Lorsque les deux solutions sont homogènes, la solution d'acide acrylique et N-N'bis méthylène acrylamide est ajoutée à la solution aqueuse contenant les cations uranium et cérium. Le mélange est chauffé sur une plaque chauffante. Lorsqu'il atteint l'ébullition, une goutte de peroxyde d'hydrogène H₂O₂ est ajoutée et un gel se forme. Le gel est ensuite chauffé sur une plaque chauffante à 250°C jusqu'à déshydratation complète du gel. Le xérogel ainsi obtenu est calciné sous air pendant 1 heure dans un four tubulaire programmé à 520°C, ce palier étant atteint à la vitesse de 5°C/min depuis la température ambiante (20°C). Une seconde calcination est opérée dans le même four à 620°C pendant 1 heure sous atmosphère Ar/5%H₂. Cette température est atteinte à la vitesse de 5°C/min depuis la température ambiante.

### b) Préparation d'une électrode à partir de l'oxyde U_{0,7}Ce_{0,3}O_{2±δ}

Afin de réaliser une électrode à partir du matériau actif précédemment synthétisé, 487 mg de l'oxyde de U_{0,7}Ce_{0,3}O₂ sont pesés et ajoutés dans un bécher ainsi que 35 mg de noir d'acétylène et 37,5 mg de préparation de polyfluorure de vinylidène en suspension à 60% massique dans de l'eau. Le mélange est versé et broyé dans un mortier. Quelques gouttes d'éthanol sont ajoutées au mélange pendant le broyage pour faciliter l'homogénéisation. La quantité d'éthanol est ajustée pour obtenir une pâte à l'aspect plastifié bien homogène. Cette pâte est ensuite laminée afin d'obtenir un film mince. Des électrodes circulaires de 12 mm de diamètre sont alors découpées au moyen d'un emporte-pièce. Les électrodes obtenues de 57,0 mg sont laissées une journée à l'air en boîte à gants puis pressée 10 secondes sous 8 tonnes dans une grille d'acier inoxydable repliée sur elle-même.

### c) Test électrochimiques

Une électrode obtenue selon les modalités du paragraphe b) ci-dessus est intégrée dans une grille d'acier et est connectée en tant qu'électrode de travail à un potentiostat Voltalab PST050 de Radiometer Analytical exploité par le logiciel Voltamaster 4. Une plaque de platine est utilisée comme contre-électrode et l'électrode de référence est une électrode Ag/AgCl (3 M NaCl). L'électrolyte est une solution aqueuse de KOH à 1 M de pH 13,7.

L'électrode est cyclée trente fois à 20 mV/s puis dix fois à : 2, 5,10, 20, 50 et 100 mV/s sur les plages [-0,6 ; 0 V].

Le voltammogramme obtenu est représenté sur la figure 4, illustrant l'évolution du courant I (en A/g) en fonction du potentiel E (en mV exprimé par rapport au couple Ag/AgCl). A 2 mV/s, une capacité de 36 F/g est obtenue à la décharge pour [-0,6 ; 0 V]. Cela témoigne de l'importante activité électrochimique du matériau synthétisé dans cette plage. Il est à noter également que la forme quasi-rectangulaire du voltammogramme témoigne de l'aspect pseudocapacitif du matériau actif.

### EXEMPLE COMPARATIF 1

Le présent exemple illustre la préparation d'un oxyde de formule UO_{2±δ} avec 0≤δ≤0,5, la préparation d'une électrode à partir de cet oxyde et la mise en place de cette électrode dans un dispositif, de sorte à tester ses performances électrochimiques.

### a) Préparation de l'oxyde UO_{2±δ}

Pour préparer l'oxyde de formule mentionnée ci-dessus, 5,579 g de nitrate d'uranium hexahydraté et 1,134 g d'urée sont pesés et ajoutés dans une solution aqueuse de 100 mL d'acide nitrique à 2M sous agitation. D'autre part, 3 g de N-N'bis méthylène acrylamide sont pesés et ajoutés à une solution de 30 mL d'acide acrylique sous agitation. Lorsque les deux solutions sont homogènes, la solution d'acide acrylique et N-N'bis méthylène acrylamide est ajoutée à la solution aqueuse contenant les cations uranium. Le mélange est chauffé sur une plaque chauffante. Lorsqu'il atteint l'ébullition, une goutte de peroxyde d'hydrogène H₂O₂ est ajoutée et un gel se forme. Le gel est ensuite chauffé sur une plaque chauffante à 250°C jusqu'à déshydratation complète du gel. Le xérogel ainsi obtenu est calciné sous air pendant 1 heure dans un four tubulaire programmé à 520°C, ce palier étant atteint à la vitesse de 5°C/min depuis la température ambiante (20°C). Une seconde calcination est opérée dans le même four à 620°C pendant 1 heure sous atmosphère Ar/5%H₂. Cette température est atteinte à la vitesse de 5°C/min depuis la température ambiante.

### b) Préparation d'une électrode à partir de l'oxyde UO_{2±δ}

Afin de réaliser une électrode à partir du matériau actif précédemment synthétisé, 188 mg de l'oxyde de UO_{2±δ} sont pesés et ajoutés dans un bécher ainsi que 38 mg de noir d'acétylène et 41 mg de préparation de polyfluorure de vinylidène en suspension à 60% massique dans de l'eau. Le mélange est versé et broyé dans un mortier. Quelques gouttes d'éthanol sont ajoutées au mélange pendant le broyage pour faciliter l'homogénéisation. La quantité d'éthanol est ajustée pour obtenir une pâte à l'aspect plastifié bien homogène. Cette pâte est ensuite laminée afin d'obtenir un film mince. Des électrodes circulaires de 12 mm de diamètre sont alors découpées au moyen d'un emporte-pièce. Les électrodes obtenues de 30,0 mg sont laissées une journée à l'air en boîte à gants puis pressée 10 secondes sous 8 tonnes dans une grille d'acier inoxydable repliée sur elle-même.

### c) Test électrochimiques

Une électrode obtenue selon les modalités du paragraphe b) ci-dessus est intégrée dans une grille d'acier et est connectée en tant qu'électrode de travail à un potentiostat Voltalab PST050 de Radiometer Analytical exploité par le logiciel Voltamaster 4. Une plaque de platine est utilisée comme contre-électrode et l'électrode de référence est une électrode Ag/AgCl (3 M NaCl). L'électrolyte est une solution aqueuse de LiNO₃ à 5 M de pH 6,2.

L'électrode est cyclée trente fois à 20 mV/s puis dix fois à : 2, 5,10, 20, 50 et 100 mV/s sur les plages [-0,6 ; 0 V].

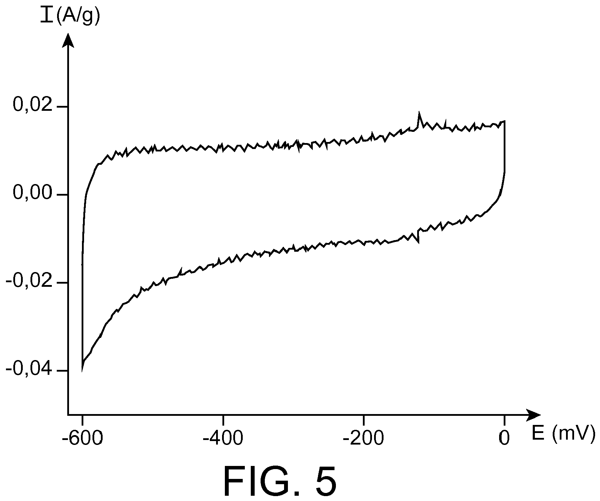

Le voltammogramme obtenu est représenté sur la figure 5, illustrant l'évolution du courant I (en A/g) en fonction du potentiel E (en mV exprimé par rapport au couple Ag/AgCl). Comme en témoigne ce voltammogramme avec des capacités identiques et très faibles (5 F/g) quelle que soit la vitesse de balayage, ce composé n'a pas de propriété pseudocapacitive notable à l'inverse des autres matériaux substitués présentés précédemment.

## Revendications

1. Utilisation d'un oxyde d'uranium comprenant au moins un élément de la famille des terres rares comme matériau actif d'une électrode de supercondensateur.

2. Utilisation selon la revendication 1, dans laquelle le au moins un élément de la famille des terres rares est un élément choisi parmi les éléments lanthanides, l'yttrium, le scandium et les mélanges de ceux-ci.

3. Utilisation selon la revendication 1 ou 2, dans laquelle le au moins un élément de la famille des terres rares est un élément choisi parmi La, Ce, Nd, Sm, Gd, Yb, Y et les mélanges de ceux-ci.

4. Utilisation selon l'une quelconque des revendications précédentes, dans laquelle l'oxyde d'uranium comprenant au moins un élément de la famille des terres rares répond à la formule (I) suivante :
U₁₋ₓAₓO_{2±δ}
dans laquelle 0<x<1 ; 0≤δ≤0,5 et A est au moins un élément de la famille des terres rares.

5. Utilisation selon la revendication 4, dans laquelle A est choisi parmi La, Ce, Nd, Gd, Y et les mélanges de ceux-ci.

6. Utilisation selon l'une quelconque des revendications précédentes, dans laquelle le matériau actif est un matériau pseudocapacitif.

7. Electrode de supercondensateur comprenant, comme matériau actif, au moins oxyde d'uranium comprenant au moins un élément de la famille des terres rares tel qu'utilisé selon l'une quelconque des revendications 1 à 6.

8. Electrode selon la revendication 7, qui comprend un ou plusieurs liants organiques.

9. Electrode selon la revendication 7 ou 8, qui comprend un additif carboné conducteur de l'électricité choisi parmi les noirs de carbone, les noirs d'acétylène, du graphite, du graphène, des nanotubes de carbone, des fibres de carbone, du carbone graphitique et les mélanges de ceux-ci.

10. Supercondensateur comprenant au moins une cellule comprenant une électrode positive, une électrode négative et un électrolyte conducteur d'ions disposé entre l'électrode positive et l'électrode négative, **caractérisé en ce que** l'une au moins des électrodes comprend, comme matériau actif, au moins un oxyde tel qu'utilisé selon l'une quelconque des revendications 1 à 6.

11. Supercondensateur selon la revendication 10, dans lequel l'électrode positive et l'électrode négative comportent toutes deux, comme matériau actif, au moins un oxyde tel qu'utilisé selon l'une quelconque des revendications 1 à 6, lequel supercondensateur étant un supercondensateur pseudocapacitif.

12. Supercondensateur selon la revendication 10, dans lequel l'électrode positive comporte, comme matériau actif, au moins un oxyde tel qu'utilisé selon l'une quelconque des revendications 1 à 6, et l'électrode négative comporte, comme matériau actif, un matériau autre que l'oxyde tel qu'utilisé ci-dessus, le supercondensateur, qui est en résulte, étant un supercondensateur asymétrique.

13. Supercondensateur selon la revendication 12, dans lequel l'électrode négative comporte, comme matériau actif, un matériau apte à stocker des charges par formation d'une double couche électrochimique.

14. Supercondensateur selon la revendication 13, dans lequel le matériau actif apte à stocker des charges par formation d'une double couche électrochimique est du carbone activé.

15. Supercondensateur selon l'une quelconque des revendications 10 à 14, dans lequel l'électrolyte est un électrolyte liquide.

16. Supercondensateur selon la revendication 15, dans lequel l'électrolyte liquide est un électrolyte aqueux.

17. Supercondensateur selon la revendication 16, dans lequel l'électrolyte aqueux est une solution aqueuse comprenant des cations, tels que H⁺, K⁺, Li⁺ et Na⁺ et comprenant des anions, tels que OH⁻, SO₄²⁻ et NO₃⁻.

18. Supercondensateur selon la revendication 16 ou 17, dans lequel l'électrolyte aqueux est une solution aqueuse comprenant du sulfate de lithium Li₂SO₄, du sulfate de sodium Na₂SO₄, du sulfate de potassium K₂SO₄, de l'acide sulfurique H₂SO₄, du nitrate de lithium LiNO₃ ou de l'hydroxyde de potassium KOH.
